(19) Europäisches Patentamt
European Patent Office
Office européen des brevets

(11) Publication number: 0 443 626 A2

# (12) EUROPEAN PATENT APPLICATION

(21) Application number: 91102697.9

(22) Date of filing: 23.02.91

(51) Int. Cl.5: G03G 5/147, G03G 5/05

The application is published incomplete as filed (Article 93 (2) EPC). The point in the description at which the omission obviously occurs has been left blank.

A request for correction of page 37 has been filed pursuant to Rule 88 EPC. A decision on the request will be taken during the proceedings before the Examining Division (Guidelines for Examination in the EPO, A-V, 2.2).

(30) Priority: 23.02.90 JP 44007/90

(43) Date of publication of application: 28.08.91 Bulletin 91/35

(84) Designated Contracting States: BE CH DE FR GB IT LI NL SE

(71) Applicant: IDEMITSU PETROCHEMICAL CO. LTD.
1-1, Marunouchi 3-chome Chiyoda-ku
Tokyo 100(JP)

(72) Inventor: Kurahashi, Akihiko
c/o Idemitsu Petrochem. Co., Ltd., 1660 Kamiizumi
Sodegaura-machi, kimitsu-gun, Chiba-ken(JP)
Inventor: Kageyama, Akira
c/o Hitachi Chemical Co., Ltd.,
4-13, Higashi-machi 1-chome Ibaragi-ken(JP)

(74) Representative: TER MEER - MÜLLER - STEINMEISTER & PARTNER
Mauerkircherstrasse 45
W-8000 München 80(DE)

## (54) Electrophotographic photosensensitive member.

(57) An electrophotographic photosensitive member has a electroconductive support and a photoconductive layer formed on a surface of the electroconductive support, in which the surface of the photoconductive layer is provided with a protective layer composed of a cured resin of a curable phosphazene compound as the outermost layer or in which the surface of the photocon- ductive layer is composed of the curable phosphazene compound. The electrophotographic photosensitive member has a high surface hardness, is excellent in durability, and provides stable image without any distortion.

EP 0 443 626 A2

## BACKGROUND OF THE INVENTION

### 1. Field of the Invention

The present invention relates to an electrophotographic photosensitive member and, more particularly, to an electrophotographic photosensitive member suitable for use with copying machines and so forth.

### 2. Description of Related Art

Electrophotographic machines utilizing Carlson method and having an electrophotographic photosensitive member incorporated thereinto, such as copying machines, laser beam printers, light-emitting diode printers and so on, are designed such that a surface of the electrophotographic photosensitive member is first charged by corona discharge treatment and a necessary portion of the electrophotographic photosensitive member is exposed to a light, thereby causing the surface charge to selectively disappear from the exposed portion thereof and forming an electrostatic latent image. A developer called a toner is then allowed to adhere to the electrostatic latent image formed thereon, which in turn is transferred and fixed to paper and other medium to form an electrophotograph.

Heretofore, the electrophotographic photosensitive member of this kind has a photoconductive monolayer disposed on the surface of a electroconductive support and requires the following characteristics:

(1) charging to a desired electric potential in a dark place (charging performance);

(2) leaking no surface electric potential in a dark place (ability of retaining electric potential); and

(3) attenuating a surface electric potential rapidly during exposure to a light (photoresponsive performance).

In recent years, in order to comply with various requirements, there has been developed an electrophotographic photosensitive member which is of such a type that the function of producing an electric charge and that of transporting it are performed by different layers and, as a result, which is provided with a plurality of photoconductive layers.

Recently, whether the electrophotographic photosensitive member has the photoconductive monolayer or multi-layer, growing demands have been made to develop machines which can print at a higher speed, which are more compact in size, and which can further shorten a process time per print, a time required for a series of processes ranging from charging through exposing to light and developing to charge elimination. Attempts made in order to meet with such requirements may lead to imposing a greater mechanical load upon the photoconductive layer or layers.

Such a mechanical load is caused to be imposed due to contact of the electrophotographic photosensitive member with a developer, a toner, paper and a blade or a brush so disposed in a cleaning unit as to clean the toner left slightly adhered to the surface of the electrophotographic photosensitive member. It is to be noted that the higher the speed at which the series of processing starting with charging through exposure and development and ending with charge eliminating is performed, the greater the mechanical load to be imposed upon the electrophotographic photosensitive member. Consequently, conventional machines present the problems that the electrophotographic photosensitive member may be worn out to a remarkably great extent and the life thereof may be shortened.

Further, from now on, it is anticipated that a higher speed for makes a number of printing paper per surface of the electrophotographic photosensitive member increase more and more. In this case, an improvement in resistance to wearing out the electrophotographic photosensitive member is required in terms of its mechanical life.

Therefore, in order to improve wear characteristic of the surface of the electrophotographic photosensitive member, it has been proposed that an anti-wear protective layer is provided as an outermost layer of the electrophotographic photosensitive member. For example, there have been proposed resins for forming such a protective layer, such as silicone resins (as disclosed in Japanese Patent Laid-open (kokai) Publication No. 75,460/1987), epoxy resins (as disclosed in Japanese Patent Laid-open (kokai) Publication No. 103,741/- 1978), melamine resins (as disclosed in Japanese Patent Laid-open (kokai) Publication No.217,052/1986), fluorine resins (as disclosed in Japanese Patent Laid-open (kokai) Publication No.115,944/1985), and acryl resins (as disclosed in Japanese Patent Laid-open (kokai) Publication No.3,538/- 1979).

It is to be noted, however, that these per se known technology can achieve only an insufficient degree of the wear characteristic, although originally sought to be achieved, rather decrease electrophotographic characteristic or cause a decrease in the printing concentration of the toner or blushing. Further, the problems may arise that the performance of the electrophotographic photosensitive member varies to a

remarkable extent with changes in surrounding conditions, particularly surrounding moisture, and that defects of image, such as printing defects called image flow or blushing, are likely to occur.

In addition to the aforesaid technology, another technology has been proposed in Japanese Patent Laid-open (kokai) Publication No. 89,764/1982, which discloses a number of polycarbonates and curable resins as a binding resin for forming the protective layer. These resins, however, cannot be said to be sufficiently high in adhesion, strength, surface hardness, and so on.

On the other hand, Japanese Patent Laid-open (kokai) Publication Nos. 30,856/1988 and 56,658/1988 propose each an electrophotographic photosensitive member with a protective layer of polycarbonate or polyester containing fluorine resin powders.

However, these proposals can improve slip characteristics of the electrophotographic photosensitive member yet they suffer from the problems that a decrease in the film strength and surface hardness are rather caused.

SUMMARY OF THE INVENTION

The present invention has been performed under circumstances as described hereinabove.

Therefore, the object of the present invention is to provide an electrophotographic photosensitive member which is provided with excellent adhesion to a electroconductive support, a photoconductive layer or a protective layer, high surface hardness, and remarkable durability (heat resistance, moisture resistance, period of retaining durability, etc.) by using a curable phosphazene compound.

In order to solve the aforesaid problems, an embodiment of the present invention is directed to the electrophoto-graphic photosensitive member characterized in that at least a surface of the protective layer for coating a photoconductive layer formed on a conductive substrate is composed of a cured resin of the curable phosphazene compound.

Another embodiment of the present invention consists of the electrophotographic photosensitive member characterized in that the photoconductive layer formed on the electroconductive support is formed by using the curable phosphazene compound.

In the electrophotographic photosensitive member in any embodiment of the present invention, the curable phosphazene compound to be employed for the electrophotographic photosensitive member preferably includes a curable phosphazene compound as represented by the following general formula [I]:

-[NP(X)a(Y)b]n- [I]

(wherein a and b are each a real number in which
$a > 0$ and $b \geqq 0$, and $a + b = 2$;
$n \geqq 3$;
X is a curable group; and
Y is a non-curable group).

Another embodiment of the present invention is directed to the electrophotographic photosensitive member characterized in that a charge generation layer and a charge transport layer are laminated on the conductive substrate and a protective film, as an outermost layer, composed of a cured resin of a curable phosphazene compound as represented by the following general formula [II]:

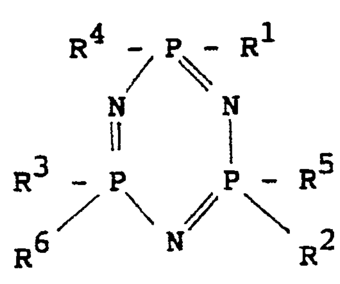

[II]

(wherein $R^1$ and $R^2$ are each an acryloyl group, a methacryloyl group, an acryloyl-containing group or a methacryloyl-containing group, provided that $R^1$ and $R^2$ are identical to or different each other; and

$R^3$, $R^4$, $R^5$ and $R^6$ are each an acryloyl group, a methacryloyl group, an acryloyl- or methacryloyl-containing group, an alkyl group, a substituted alkyl group, an alkoxy group, a substituted alkoxy group, an aryl group, a substituted aryl group, an aryloxy group or a substituted aryloxy group, provided that $R^3$, $R^4$,

$R^5$ and $R^6$ are identical to or different from each other).

BRIEF DESCRIPTION OF THE DRAWING

Fig. 1 is a graph showing a UV absorption spectrum of a cured film of the curable phosphazene compound.

DESCRIPTION OF THE PREFERRED EMBODIMENTS

In accordance with the present invention, the following three modes are of significance in order to form the protective layer on the photoconductive layer of the electrophotographic photosensitive member.

(1) The protective layer itself is formed by using the curable phosphazene compound.

(2) The surface of the protective layer is coated with the cured body of the curable phosphazene compound.

(3) If the protective layer is not formed in the manner as described hereinabove, the photoconductive layer is formed by using the curable phosphazene compound.

Curable phosphazene compound

Although the curable phosphazene compound to be used for the present invention contains various ones, there may appropriately be employed the compound as represented by the following general formula [I]:

-[NP(X)a(Y)b]n- [I]

(wherein a and b are each a real number in which
$a > 0$ and $b \geq 0$, and $a + b = 2$;
$n \geq 3$;
X is a curable group; and
Y is a non-curable group).

It is noted herein that the general formula [I] representing the curable phosphazene compound is intended in this specification to mean an average value of a mixture of plural compounds, not a single compound. It is thus to be understood that the suffixes a and b are not necessarily restricted to integers and each of them is intended herein to contain the real number including a fraction. The suffix n is likewise intended herein to mean the real number equal to or larger than 3, including a fraction, and preferably ranges from the real number satisfying $3 \leq n \leq 18$. Particularly, the suffix n of 3 or 4 or a cyclic compound composed of the mixture (n being a numeral between 3 and 4) is preferred.

In the above formula [I], the group represented by the group X denotes the curable group which is intended to mean a functional group which can be cured by reaction upon radiation of active energy rays such as ultraviolet rays, visible light, electron rays, X-ray or the like and, more specifically, to mean a group having a reactive double bond. The group having the reactive double bond contains various one and may specifically include, for example, an acryloyl group, a methacryloyl group or a functional group containing an acryloyl group, a methacryloyl group, a vinyl group or an allyl group.

The functional group containing acryloyl group or methacryloyl group may be represented by acryloyl group, methacryloyl group or a group as represented by the following general formula:

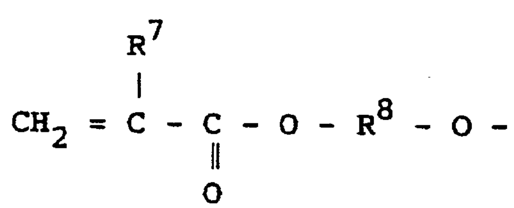

(III)

(wherein $R^7$ is hydrogen atom or methyl group; and
$R^8$ is an alkylene group (including a branched alkylene group) having a carbon atom or atoms of from 1 to 12, preferably from 1 to 5).

In addition to those as represented by the general formula (III), the functional group containing acryloyl or methacryloyl group may be a functional group as represented by the following formula:

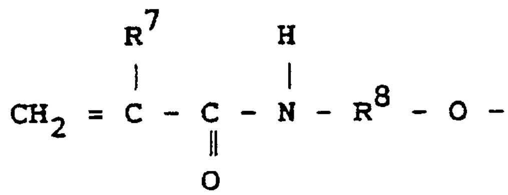

(IV)

(wherein $R^7$ and $R^8$ have the same meanings as above), or a residue obtainable by removing hydrogen atom from the hydroxy group of a hydroxylalkyl-substituted (meth)acrylamide, or a functional group as represented by the following general formula:

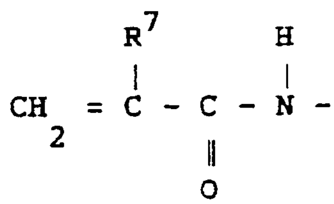

(V)

(wherein $R^7$ has the same meanings as above), or a residue obtainable by removing one hydrogen atom from the amino group of an acrylamide or methacrylamide.

The functional group containing allyl group may include, on top of allyl group itself, for example, allyloxy group [$CH_2$ = CH - $CH_2$ - O -] and further functional groups as represented by the following general formula:

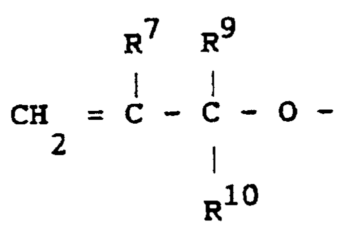

(VI)

as represented by the following general formula:

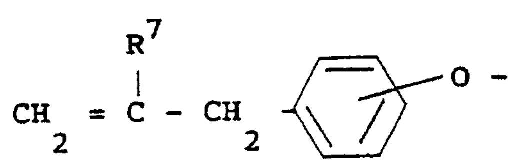

(VII)

and as represented by the following general formula:

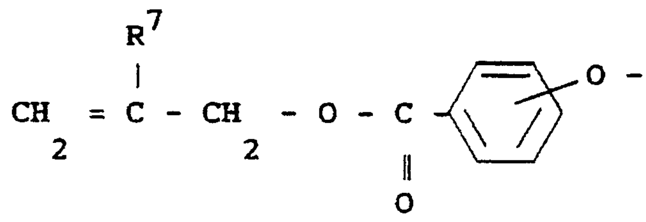 (VIII)

(wherein $R^7$ has the same meaning as above;

$R^9$ and $R^{10}$ are identical to or different from each other and each are hydrogen atom or an alkyl group), or each group being a residue obtainable by removing hydrogen atom from hydroxy group of the allyl compound having one hydroxyl group.

Among the various curable groups as described hereinabove, there may be formulated a phosphazene compound having, as the group X, e.g. N-methylolacrylamido group [a residue obtainable by removing hydrogen atom from the hydroxy group of $CH_2=CHCONHCH_2OH$] or (meth)acryloyloxy group, from the viewpoint of improvement in adhesion of the cured material to a partner material.

The group represented by Y in the general formula [I] above is the non-curable group which may be a group including, for example, hydrogen atom, a halogen atom, an aryl group, a substituted aryl group, an aryloxy group, a substituted aryloxy group, an alkoxy group, a substituted alkoxy group, $-COOR^{11}$or $-N(H)-R^{11}$(wherein $R^{11}$is an alkylgroup having from 1 to 11 carbon atoms).

Among these groups, the group containing fluorine atom is preferred in terms of improvement in slip characteristic and wear characteristic of the cured coating, etc. and the group containing carbonyl group is preferred in terms of improvement in adhesion of the cured coating. Thus, phosphazene compounds having these groups may be formulated.

Furthermore, in order to improve water resistance, wear characteristic, reduction in water absorption and resistance to discoloration, the non-curable group represented by Y may preferably be a fluoride-cotaining group as represented by the following general formula:

$Z(CF_2)_nCH_2O-$

(where n is an integer from 1 to 4; and

Z is hydrogen atom or fluorine atom)

or a fluoride-containing group as represented by the following general formula:

$(CF_3)_2CHO-$

The fluoride-containing group may include, for example, 2,2,2-trifluoroethoxy group, 2,2,3,3,3-pentafluoro-1-propoxy group, 2,2,3,3,4,4,4-heptafluoro-1-butoxy group, 2,2,3,3-tetrafluoro-1-propoxygroup, 2,2,3,3,4,4,5,5-octafluoro -1-pentoxy group and 1,1,1,3,3,3-hexafluoro-2-propoxy group.

When a principal object is placed on an improvement in adhesion and flexibility, there may be formulated a phosphaze compound having, as group Y, for example, a residue [$O(CH_2)_nCOOH$ (where n is 1 to 15)] obtainable by removing a hydrogen atom from a saturated carboxilic acid, a residue [$-OC_6H_4(CH_2)_nCOOH$ (where n is 0 or an integer from 1 to 2) obtainable by removing a hydrogen atom from a carbocyclic carboxylic acid, $-OC_6H_3(COOH)_2$, or $-OC_6H_3(R^{12})COOH$ (where $R^{12}$ is $-OH$ or $-OCH_3$)].

More specifically, the saturated carboxylic acid may include, for example, oxyacetic acid, $\beta$ -hydroxypropionic acid, 4-hydroxyacetic acid, 12-hydroxydecanoic acid, 16-hydroxyhexadecanoic acid or the like. The carbocylic carboxylic acid may include, for example, p-oxybenzoic acid, p-hydroxyphenylacetic acid, p-hydroxyphenylpropionic acid, 4-hydroxyphthalic acid, 2,3-dihydroxybenzoic acid, 4-hydroxy-3-methoxybenzoic acid or the like.

In brief, the substituent X is a group curing the phosphazene compound of the general formula [I], for example, upon radiation of active energy rays, while the substituent Y is a group adjusting curing performance as well as adjusting physical properties of the resulting cured resin. Hence, various physical properties of the cured resin consisting of the cured body of the phosphazene compound can be determined by appropriately selecting the reference symbols a and b.

It is provided, however, that the phosphazene compound as represented by the general formula [I] above, in which a is 0, is excluded from the category of the curable phosphazene compound to be used for

the present invention, because the compound involved has no curability. It can be noted that the phosphazene compound of the general formula [I] above, in which a is 2 and b is 0, or the phosphazene compound having a recurring unit as represented by the following general formula, $-[NP(X)_2]-$, can be employed as the curable phosphazene compound for the present invention.

The curable phosphazene compounds to be employed for the present invention are those having a recurring unit as represented by the general formula [I] and it has the degree of polymerization of 3 or higher, preferably in the range from 3 to 18. Particularly preferred is the one having the degree of polymerization of 3 or 4 or a mixture thereof. Although the recurring unit of the general formula [I] may be one in a linear form, a cyclic one is more preferred.

Further, in accordance with the present invention, when the photoconductive layer comprises the charge generation layer and the charge transport layer, it is preferred that the protective layer to be formed on the charge transport layer be prepared by the cured body of the curable phosphazene compound as represented by the general formula [II]:

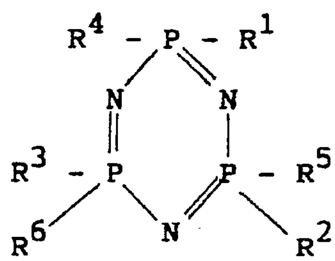

[II]

(wherein $R^1$ and $R^2$ are each an acryloyl group, a methacryloyl group, an acryloyl-containing group or a methacryloyl-containing group, provided that $R^1$ and $R^2$ are identical to or different each other; and

$R^3$, $R^4$, $R^5$ and $R^6$ are each an acryloyl group, a methacryloyl group, an acryloyl- or methacryloyl-containing group, an alkyl group, a substituted alkyl group, an alkoxy group, a substituted alkoxy group, an aryl group, a substituted aryl group, an aryloxy group or a substituted aryloxy group, provided that $R^3$, $R^4$, $R^5$ and $R^6$ are identical to or different from each other).

The acryloyl group, methacryloyl group or acryloyl-or methacryloyl-containing group is the same as for the curable phosphazene compound as represented by the general formula [I], so that detailed description thereof will be omitted herefrom.

As the alkyl group, there may be mentioned a lower alkyl group having a carbon atom or atoms from 1 to 5 and it may include, for example, methyl group, ethyl group, propyl group, pentyl group, etc. These lower alkyl groups may be branched and have a substituent composed of a lower alkyl group having a carbon atom or atoms from 1 to 5, such as methyl group, ethyl group, etc.

Specific examples of the aryl group, the substituted aryl group, the aryloxy group and the substituted aryloxy group may include, for example, phenyl group, methylphenyl group, phenyloxy group, methylphenyloxy group, etc.

Electroconductive Support

As specific examples of the electroconductive support constituting the electrophotographic photosensitive member, there may be mentioned aluminium, aluminium alloy, copper, zinc, stainless steel, vanadium, molybdenum, chromium, titanium, nickel, indium, gold, platinum, etc.

Other electroconductive support may include, for example:

(1) plastics (including, for example, polyethylene, polypropylene, polyvinyl chloride, polyethylene terephthalate, acryl resins, polyethylene fluoride, etc.) with a layer coated by vacuum deposition method, a layer composed of aluminium, aluminium alloy, indium oxide, tin oxide, indium oxide alloy, tin oxide alloy, etc.;

(2) a structural body with electroconductive particles (including, for example, aluminium powder, titanium oxide, tin oxide, zinc oxide, carbon black, etc.) coated through an appropriate binder on a substrate composed of plastics or on a substrate composed of a material identical to that of the aforesaid electroconductive support;

(3) plastics or paper impregnated with the electroconductive particles; and

(4) plastics containing electroconductive polymers.

It is noted herein that the electroconductive support may be provided on its surface with an undercoat layer (an adhesive layer) having both a barrier function and an under-coating function. The undercoat layer may be formed with various objects, for example, to improve adhesion to the photoconductive layer, to improve coating performance, to protect the electroconductive support, to coat defects on the electroconductive support, to improve introduction of electric charges from the electroconductive support and to protect the photoconductive layer from electrical breakage.

The material to be employed for the undercoat layer may include, for example, polyvinyl alcohol, poly-N-vinylimidazole, polyethylene oxide, ethyl cellulose, methyl cellulose, ethylene-acrylate copolymer, casein, polyamide, copolymer nylon, glue, gelatin, etc. The undercoat layer may be formed in per se known manner.

Photoconductive Layer

The electrophotographic photosensitive member according to the present invention has the photoconductive layer formed on the electroconductive support.

The photoconductive layer constituting the electrophotographic photosensitive member according to the present invention may be composed of a single layer or plural layers.

(a) Photoconductive monolayer

As specific examples of the photoconductive monolayer, there may be mentioned a film deposited from Se, Se-Te alloy, Se-As alloy, Se-Sb alloy, Se-Bi alloy, etc., an organic photosensitive body, e.g. polyvinyl carbazole/trinitrofluorenon, etc., or amorphous silicon.

In forming an organic photosensitive material such as polyvinyl carbazole/trinitrofluorenon, it is preferred to use the curable phosphazene compound as a binding agent.

When the photoconductive layer is composed of the cured resin of the curable phosphazene compound, the amount of the organic photosensitive material in the photoconductive layer may arbitrarily be determined inaccordance with a desired degree of photosensitivity.

Further, when the photoconductive layer is prepared from the curable phosphazene compound, a mono- or polyfunctional polymer may be added to the curable phosphazene compound, as needed.

There may be contained a (meth)acryl compound copolymerizable with the curable phosphazene compound such as, for example, a polyfunctional acrylate, e.g. dipentaerythritol hexaacrylate.

Further, a silicon-containing curable compound such as silicone, modified urethane acrylate, (meth)-acryloxysilane compound, (meth)acrylate modified polysiloxane, etc. may be employed. These compounds may serve as improving surface smoothness.

The curable phosphazene compound is employed with a solvent, as needed.

As the solvent, there may be mentioned, for example, an organic solvent including a ketone such as methyl ethyl ketone, methyl isobutyl ketone, cyclohexanone, etc., an aromatic hydrocarbon such as benzene, toluene, xylene, etc., a halogenated hydrocarbon such as chloroform, methylene chloride, etc., an alcohol such as methanol, ethanol, propanol, butanol, etc., an ether such as tetrahydrofuran, dioxane, etc., and a cellosolve such as ethyl cellosolve, butyl cellosolve, etc. These solvents may be employed singly or in combination of two or more.

Among these solvents, the ketone, alcohol and a mixed solvent thereof are preferred. Particularly, methyl isobutyl ketone and a mixed solvent with isopropyl alcohol or butyl alcohol is preferred.

The ratio of the solvent to the curable phosphazene compound is not restricted to a particular range and may range usually from 1 : 9 to 9 : 1 by weight.

The curable phosphazene compound may be employed by addition of a cure initiator.

In the case of curing by light - for example, when the curing is performed by using ultraviolet rays or visible light - it is preferred to add, as a photopolymerization initiator, 1-hydroxycyclohexyl phenyl ketone, dibenzoyl, benzoyl methyl ether, benzoyl ethyl ether, p-chlorobenzophenone, p-methoxybenzophenone, benzoyl peroxide, di-tert-butyl peroxide, camphorquinone, etc.

The photopolymerization initiator may be employed singly or in combination of two or more.

The quantity of the cure accelerator may usually range from 0.05 part to 10.0 parts by weight with respect to 100 parts by weight of the curable phosphazene compound.

In the case of curing by heat - when the curing is performed by heating or at ambient temperature - it is preferred to use a peroxide compound or an amine compound singly or in combination with each other as the polymerization initiator. Examples of the peroxide compound may include benzoyl peroxide, p-chlorobenzoyl peroxide, 2,4-dichlorobenzoyl peroxide, t-butyl hydroperoxide, di-t-butyl peroxide, dicumyl

peroxide, t-butyl peroxyacetate, diacetate, t-butyl peroxybenzoate, etc. As the amine compounds, there may be mentioned, for example, N,N-diethanol-p-toluidine, dimethyl-p-toluidine, p-toluidine, methylamine, t-butylamine, methyethylamine, diphenylamine, 4,4'-dinitrodiphenylamine, o-nitroaniline, p-bromoaniline, 2,4,6-tribromoaniline, etc.

In this case, a total quantity of the peroxide compound and the amine compound may range usually from 0.05 part to 5.0 parts by weight with respect to 100 parts by weight of the curable phosphazene compound.

In forming the photoconductive layer by curing the curable phosphazene compound, a composition prepared for the photoconductive layer comprising the curable phosphazene compound, the monofunctional or polyfunctional monomer to be added as needed, the organic photosensitive material, the solvent, and the cure initiator is prepared and coated on the surface of the photoconductive support directly or through the undercoat layer, followed by curing.

The procedures and method for coating may be selected from conventional ones such as spinner method, spraying method, roll coater method, dipping method, brushing method, etc. When the solvent is employed, the solvent is removed after coating.

The curable composition is cured by heating or by exposure to ultraviolet rays, electron rays, X-rays, gamma rays or the like, thereby forming a cured film.

The film thickness of the photoconductive layer formed by using the curable phosphazene compound may range usually from 0.01 $\mu$ m to 100$\mu$ m.

It is to be noted that the photoconductive monolayer may be formed with a binder resin other than the cured resin of the curable phosphazene compound. In this case, a protective layer composed of the cured resin of the curable phosphazene compound may appropriately be formed on the photoconductive layer, as will be described hereinafter.

(b) Photoconductive multilayer

The photoconductive layer of a function-separate type formed in a multilayer form comprises a charge generation layer and a charge transport layer.

- Charge generation layer -

The charge generation layer contains a charge generating material composed of an organic or inorganic pigment and a binder resin.

As the charge generating material, there may be mentioned, for example, pigments and dyestuff, which are known as generating an electric charge, which are of an azoxybenzene type, a disazo type, a trisazo type, a benzimidazole type, a multicyclic quinoline type, an indigoid type, a quinacridone type, a phthalocyanine type, a perylene type, a perynone type, a cyanine pigment, a (thio)pyrylium salt, a squalilium pigment, etc. Examples of these pigments are disclosed, for example, in Japanese Patent Laid-open (kokai) Publication Nos. 37,543/1972, 37,544/1972, 185,453/1972, 18,544/1972, 43,942/1973, 70,538/1973, 1,231/1974, 105,536/1974, 75,214/1975 and 92,738/1975. Among these pigments, the pigments of the phthalocyanine type are preferred. Further, among the phthalocyanine type pigments, metal-free phthalocyanines of $\tau$ type, $\tau$ ' type, $\eta$ type and $\eta$ ' type are particularly preferred, which are disclosed in Japanese Patent Laid-open (kokai) Publication No.182,640/1983 and European Patent Application No. 92,255 because of their high sensitivity up to long wavelength. Further, in addition to the aforesaid pigments, there may be employed any organic pigment capable of generating a charge carrier upon irradiation with a light.

The binder resin may include, for example, polyvinyl formal, polyvinyl butyrate, epoxy resin, urethane resin, etc.

The rate of the binder resin in the charge generation layer may range usually from 5 parts to 400 parts by weight, preferably from 10 parts to 300 parts by weight, with respect to 100 parts by weight of the charge generation material. If the rate would be less than 5 parts by weight, on the one hand, the adhesion of the charge generation layer to the electroconductive support may become poor, the film of the charge generation layer may become irregular or the picture quality may be decreased. If the rate would exceed 400 parts by weight, on the other hand, there is the tendency that the residual electric potential is elevated.

To the charge generation layer may be added, as needed, an additive such as a plasticizer, a defoaming agent, a flow improving agent, a pinhole suppressing agent, a coupling agent, an antioxidant, etc.

The charge generation layer may be formed, first, by preparing a dispersion in which the charge generating material and the binder resin are dispersed in a solvent with the additive added as needed, and

thereafter by coating the dispersion on the electroconductive support by means of immersion, roll, an applicator, a wire bar, and so on.

As the solvent, there may be mentioned, for example, acetone, methyl ethyl ketone, tetrahydrofuran, toluene, xylene, dichloromethane, 1,2-dichloroethane, 1,1,2-trichloroethane, methanol, isopropyl alcohol, etc.

The film thickness of the charge generation layer may range usually from 0.001μ m to 10 μ m, preferably from 0.01μ m to 5μ m. If the film thickness would be thinner than 0.001 μ m, the charge generation layer may not be formed in a uniform manner. If the film thickness would exceed 10 μ m, the the performance such as charging would be lowered.

- Charge transport layer -

The charge transport layer is formed with a charge transporting material and a binder resin.

The charge transporting material may include, for example, fluorene, fluorenone, 2,7-dinitro-9-fluorenone, 3,7-dinitro-dibenzothiophene-5-oxide, 1-bromopyrene, 2-phenylpyrene, carbazole, 3-phenylcarbazole, 2-phenylindole, 2-phenylnaphthalene, oxazole, oxadiazole, oxatriazole, triphenylamine, imidazole, chrysene, tetraphene, acridan, hydrazones, styryl compounds, 1,1-bis(p-diethylaminophenyl)-4,4-diphenyl-1,4-butadiene, 1-pnenyl-3-(4-diethylaminostyryl)-5-(4-diethylamino-phenyl)pyrazoline, 2-phenyl-4-(4-diethylaminophenyl)-5-phenyl-oxazole, poly-N-vinylcarbazole, halogenated poly-N-vinyl-carbazole, polyvinyl pyrene, polyvinylindoloquinoxaline, poly-vinvlbenzothiophene, polyvinylanthracene, polyvinylacridine, polyvinylpyrazoline, etc. These compounds may be employed singly or in combination of two or more.

As the binder resin for the charge transport layer, there may appropriately be employed the curable phosphazene compound as described hereinabove.

It is to be noted herein that the curable phosphazene compound to be employed for the formation of the charge transport layer is the same as the curable phosphazene compound to be employed for the formation of the photoconductive monolayer, so that detailed description thereof is omitted herefrom.

The rate of the charge transporting material, however, may appropriately be chosen so as to range usually from 20 parts to 80 parts by weight with respect to a total weight of the charge transporting material and the curable phosphazene compound. The film thickness of the charge transport layer formed by the cured resin of the curable phosphazene compound may be in the range usually from 5 to 50 μ m, preferably from 8 to 30μ m. If the film thickness would be thinner than 5 μ m, the charging performance may be lessened. If the film thickness would exceed 50 μ m, the tendency is shown that sensitivity and response to light may be decreased.

The process for forming the charge transport layer using the curable phosphazene compound is the same as the process for forming the photoconductive monolayer.

It is to be noted herein that, in forming the charge transport layer without using the curable phosphazene compound as the binder resin, it is preferred to employ a binder resin as will be described hereinafter. And, when the charge transport layer is formed using the following binder resin, it is preferred to form a protective layer (as will be described hereinafter) formed from the curable phosphazene compound on the surface of the charge transport layer.

As the binder resins other than the curable phosphazene compound, there may be employed, for example, polycarbonate resins, polyester carbonate resins, styrene resins, acryl resins, silicone resins, polyester resins, phenoxy resins, polyarylate resins, polysulfone resins, polyether imide resins, vinyl acetate/vinyl chloride copolymer resins, poly-N-vinylcarbazole resins, etc. These resins may be employed singly or in combination of two or more.

The rate of the binder resin may range usually from 20% to 80% by weight based on a total weight of the charge transporting material and the binder resin. If the rate would be less than 20% by weight, photoresponsiveness may be lessened. If the rate would exceed 80% by weight, durability may be decreased.

To the charge transport layer may be added, as needed, an additive such as a plasticizer, a defoaming agent, a flow improving agent, a pinhole suppressing agent, a coupling agent, an antioxidant, etc.

The charge transport layer may be formed, first, by preparing a dispersion in which the charge transporting material and the binder resin are dispersed in a solvent with the additive added as needed, and thereafter by coating the dispersion on the charge generation layer by means of immersion, roll, an applicator, a wire bar, and so on.

The solvent may be the same as those used for forming the charge generation layer.

The film thickness of the charge transport layer may range usually from 5μ m to 50 μ m, preferably from 8μ m to 30μ m. If the film thickness would be thinner than 5μ m, the charging performance may be decreased. If the film thickness would exceed 50 μ m, the sensitivity and photoresponsiveness may be

lowered.

Protective layer

The protective layer is formed on the surface of the photoconductive layer.

In accordance with the present invention, the protective layer may be formed with the cured resin of the curable phosphazene compound or with a coat layer formed with an other material and a cured layer of the curable phosphazene compound formed on the surface of the coat layer.

Description will be made of the formation of the protective layer with the cured resin of the curable phosphazene compound.

The performance of the curable phosphazene compound, the kind of the mono- or poly-functional monomer to be added as desired to the curable phosphazene compound, the kind of the solvent to be employed as needed, the kind of the cure initiator to be employed as needed, the process of forming the protective layer from the curable phosphazene compound, and so on, are the same as described hereinabove.

It is noted that the most preferred phosphazene compound is those as represented by the general formula [II].

And, in order to further improve slip characteristic, a lubricant such as silicone oil may be added. It is also possible to adde the additive as described hereinabove in description of the charge transporting material and the charge transport layer.

In forming the protective layer with the cured resin of the curable phosphazene compound, powders of a metal or a metal oxide may be dispersed in the protective layer.

As the metal to be dispersed in the protective layer, there may be mentioned, for example, aluminium, aluminium alloy, etc. As the metal oxide to be dispersed therein, there may be mentioned, for example, tin dioxide, antimony dioxide, zinc oxide, titanium oxide, tin oxide, indium oxide, bismuth oxide, etc.

The powders of the metal or the metal oxide may preferably have an average particle diameter of 0.3 $\mu$ m or smaller. The rate amount of the metal or the metal oxide may be usually 5% to 70% by weight, preferably 10% to 60% by weight.

The protective layer formed with the cured resin of the curable phosphazene compound may contain inorganic powder such as molydenum disulfide, etc., and/or resin powders such as fluorinated resin powder, acrylic resin powder, benzoguanamine-formaldehyde resin, melamine-formaldehyde resin etc. as a lubricant.

Specific examples of the fluorinated resin powders may include powders of polymers such as, for example, ethylene tetrafluoride, chloroethylene trifluoride, ethylene-propylene hexafluoride, vinyl fluoride, vinylidene fluoride, dichloroethylene difluoride, trifluoropropylmethyldichlorosilane, etc., copolymers thereof, or copolymer resins with vinylchloride.

When the protective layer itself is formed with the cured resin of the curable phosphazene compound, the film thickness of the protective layer may arbitrarily be adjusted so as to range from 0.01$\mu$ m to 100$\mu$ m, as need, preferably from o.5$\mu$ m to 15 $\mu$ m, more preferably from 1.5 $\mu$ m to 10 $\mu$ m. If the film thickness would be thinner than 0.01$\mu$ m, on the one hand, the function as the protective layer may not appear to a sufficient extent and the wear characteristic may be lowered. If the film thickness would exceed 100 $\mu$ m, on the other hand, sensitivity and response to light may be lessened and the residual electric potential may be elevated.

The protective layer formed with the cured resin of the curable phosphazene compound may be a laminate having a plurality of layers.

Description will then be made of another embodiment of the protective layer for the present invention. This mode of the protective layer involves a coat layer formed with other material and a cured layer of the curable phosphazene compound formed on the surface of the coat layer.

The other material employed for the formation of the coat layer may include, for example, polyurethane resins, polycarbonate resins, polyacrylate resins, polymethacrylate resins, polyisocyanate- or hydroxy-containing polyesters or polyethers, polyisocyanate- or hydroxy-containing acryl or epoxy resins, temporarily masked isocyanate-containing polyisocyanate prepolymers or polyisocyanates, etc.

The coat layer may be formed by means of coating, immersing, spraying, post-drying, curing or the like. The film thickness of the coat layer may range usually from 0.5 $\mu$ m to 10 $\mu$ m.

The coat layer may contain the metal or the metal oxide as described hereinabove.

The cured layer of the curable phosphazene compound to be formed on the surface of the coat layer is the same as the protective layer itself formed by the cured resin of the curable phosphazene compound.

In this case, the film thickness of the curable phosphazene compound may range usually from 0.2 $\mu$ m to 10 $\mu$ m, preferably from 0.5 $\mu$ m to 5$\mu$ m. The shape of the electrophotographic photosensitive member

according to the present invention is not restricted to a particular one, although it is usually of a cylindrical shape.

[Examples]

The present invention will specifically be described by way of examples.

(Preparation Example 1)

Synthesis of 1,3,5-tri(methacryloyloxyethylenedioxy)-1,3,5-tri(phenoxy)cyclotriphosphazene

A 1-liter flask equipped with a thermometer, a stirring device, a dropping funnel and a condenser was charged with 100 ml of tetrahydrofuran and 11.6 grams (0.5 mole) of metallic sodium, and 51.7 grams (0.55 mole) of phenol was dropwise added. The mixture was reacted under reflux until charged metallic sodium has disappeared. A solution of 58 grams (0.167 mole) of hexachlorocyclotriphosphazene in 100 ml of toluene was dropwise added to the resulting reaction mixture, and the mixture was reacted under reflux for 4 hours. Thereafter, the temperature of the reaction mixture was cooled down to room temperature, and 78 grams (0.6 mole) of HEMA (2-hydroxyethyl methacrylate) and 84 grams (1.0 mole) pyridine was gradually added dropwise from the dropping funnel. The resulting mixture was heated to 60°C in a warm bath and stirred at this temperature for 8 hours. To the resulting reaction mixture was added 400 cc of toluene, and the precipitated-crytals were filtered off. The filtrate was then washed with water and dried over sodium sulfate, followed by distillation of the solvent under reduced pressure producing a yellow liquid material in the yield of 82.5 grams.

(Preparation Example 2)

Synthesis of 1,1,3,3,5,5-hexa(methacryloylethylenedioxy)-cyclotriphosphazene

A 1-liter flask equipped with a thermometer, a stirring device, a dropping funnel and a condenser was charged with 58 grams (0.167 mole) of hexachlorocyclotriphosphazene, 50 ml of toluene and 168 grams (2.0 moles) of pyridine, and the mixture was then stirred. Then, 143 grams (1.1 moles) of HEMA (2-hydroxyethyl methacrylate) was gradually added dropwise from the dropping funnel.

The resulting mixture was heated to 60°C in a warm bath and stirred at this temperature for 8 hours. To the resulting reaction mixture was added 400 cc of toluene, and the precipitated-crystals were filtered off. The filtrate was then washed with water and dried over sodium sulfate, followed by distillation of the solvent under reduced pressure producing a yellow liquid material in the yield of 136 grams.

(Comparative Example 1)

Six parts by weight of polyamide resin [Nippon Rilsan Kabushiki Kaisha; trade name "M995" (solid content, 100% by weight)] and 94 parts by weight of a 1:1 mixed solution of methanol and dichloromethane were dissolved thoroughly . A 0.1mm thin aluminium plate was immersed in the resulting solution and dried at 120 °C for 40 minutes, thereby forming an intermediate layer having the film thickness of 0.2$\mu$ m.

A mixed solution comprising 2.5 parts by weight of $\tau$ -type metal-free phthalocyanine, 5.0 parts by weight of silicone resin [Shin-Etsu Chemical Ind., Co., Ltd.; trade name: "KR-255" (solid content, 50% by weight)] and 92.5 parts by weight of methyl ethyl ketone was placed in a ball mill [a pot mill; Nippon Kagaku Togyo Kabushiki Kaisha] and kneaded for 24 hours, thereby forming a dispersion for forming the charge generation layer. The resulting dispersion was then coated on the aforesaid intermediate coat by immersion, and the coat was dried at 120 °C for 60 minutes resulting in the formation of the charge generation layer having the film thickness of 0.3$\mu$ m.

Then, 6.0 parts by weight of p-diethylaminobenzaldehyde-dlphenylhydrazone, 14.0 parts by weight of polycarbonate resin [viscosity average molecular weight: 27,000; solid content: 100% by weight], 50 parts by weight of dichloromethane, and 30 parts by weight of 1,1,2-tri-chloroethane are mixed and dissolved to produce a solution for the charge transport layer. The charge transport layer is then immersed in the resulting solution, thereby coating the surface thereof with the solution and drying the resulting coat at 110 °C for 60 minutes. Thus, the charge transport layer having the film thickness of 16 $\mu$ m was formed.

The photosensitive member at this stage is called No. R1.

The photosensitive member No. R1 was measured by the following method and the result are shown in

Table 1 below.

(Electrophotographic characteristics)

Electrophotographic samples of a 60mm x 70mm square was measured by means of electrostatic recording paper tester [Kawaguchi Denki Kabushiki Kaisha; SP-428].

The initial electric potential (Vo) indicates an electric potential attenuation (Vk = $V_{30}/V_o$; where $V_{30}$ is an electric potential after 30 minutes) when the sample is irradiated with corona of -5kV for 10 seconds while rotating at the speed of 1,000 rpm. The half light exposure volume ($E_{60}$) indicates a light volume value required for the electric potential to reach a half volume upon exposure to white light of 10 lux. The residual electric potential ($V_R$) indicates an electric potential after exposure to white light for 60 seconds.

(Durability test)

By using photosensitive member samples like those used for the evaluation on the electrophotographic characteristic, the electrophotographic characteristic were measured after the corona charging (surface electric potential: -1,000 ± 100 V) and charge elimination (charge-elimination wavelength: 500 nm; exposure volume: 50 mJ/ $m^2$ ) were repeated 10,000 times and compared with the initial value. (Surface hardness)

The photosensitive member samples were measured for pencil hardness.

(Wear test)

The photosensitive member samples were measured for wear characteritic by sliding the surface of the sample with a urethane rubber blade having rubber hardness of 70 (load: 200 grams) using a wear tester (Hitachi Kasei Kogyo K.K.) 200 times per minute and by measuring for the weight of the sample which has been worn out for 20 minutes.

(Comparative Example 2)

The intermediate layer, charge generation layer and charge transport layer were formed on the elctroconductive support in substantially the same manner as in Comparative Example 1 above. Thereafter, 32.4 parts by weight of melamine resin [Hitachi Kasei Kogyo K.K.; Melan 2000; resin content: 50% by weight] and 1.8 parts by weight of polyvinyl butyral resin [Denki Kagaku Kogyo K.K.; Denka Butyral 3000-2; resin content: 100% by weight] were dissolved in 65.8 parts by weight of isopropanol. The resulting solution was coated on the sample having the charge transport layer, followed by drying and curing at 130 °C for 60 minutes and forming the protective layer having the film thickness of 4 $\mu$ m.

The photosensitive member at this stage was called No. R2.

The characteristics of the photosensitive member No. R2 were measured by the aforesaid method and the results are shown in Table 1 below.

The protective layer in this comparative example was insufficient in the half light exposure volume $E_{50}$, the residual electric potential $V_R$ and the wear characteristic. In particular, the residual electric potential was so high that it is the great obstacle for commercialization.

(Example 1)

Eighty parts by weight of 1,3,5-tri(methacryloyloxyethylenedioxy)-1,3,5-tri(phenoxy)cyclotriphosphazene prepared in Preparation Example 1 and 0.4 part by weight of benzoyl peroxide were dissolved in 6 parts by weight of methyl ethyl ketone and 13.6 parts by weight of isobutanol, and the resulting solution was coated on the surface of the charge transport layer of the photosensitive member No. R1. Then, the member was dried and cured at 110 °C for 60 minutes, thereby forming the protective layer having the film thickness of 4 $\mu$ m.

This photosensitive layer with the aforesaid protective layer was called No. 1 and measured for its characteristics by the processes as described in the Comparative Example 1 above. The results are shown in Table 1 below.

(Example 2)

The intermediate layer and the charge generation layer were formed on a 0.1 mm thin aluminium plate

as the conductive support in the game manner as in Comparative Example 1 above.

Then, 6.0 parts by weight of 1,1-bis(p-diethylaminophenyl)-4,4-diphenyl-1,3-butadiene 14.0 parts by weight of polycarbonate resin and 80 parts by weight of dichloromethane are mixed and dissolved to produce a solution for the charge transport layer. The charge generation layer is immersed in the resulting solution, thereby coating the surface thereof with the solution and drying the resulting coat at 110°C for 60 minutes. Thus, the charge transport layer having the film thickness of 16 $\mu$ m was formed.

On the surface of the charge tranport layer was coated a solution (for the protective layer) of 50 parts by weight of 1,3,5-tri(methacryloxyethylenedioxy)-1,3,5-tri-(phenoxy)cyclotriphosphazene. 25 parts by weight of methacrylate of bisphenol A-propylene oxide adduct and 0.4 part by weight of benzoyl- peroxide in 8 parts by weight of methyl ethyl ketone and 16.6 parts by weight of isobutanol. and the coat formed on the surface thereof was dried and cured at 110 °C for 60 minutes, thereby forming the protective layer having the film thickness as thick as 5$\mu$ m.

The photosensitive member with the protective layer is called No. 2.

The photosensitive member No. 2 was measured for its characteristics and the results are shown in Table 1 below.

(Example 3)

The photosensitive member No. 3 was prepared in substantially the same manner as in Example 1 except for the drying and curing which were performed under nitrogen stream.

The photosensitive member No. 3 was measured for its characteristics and the results are shown in Table 1 below.

As will be shown in Table 1 below. the electrophotographic photosensitive member according to the present invention is as good as the photosensitive member with no protective layer disposed, in electric resistance, dark attenuation, half light exposure volume and residual electric potential, yet it in excellent in electric durability and remarkably excellent in surface hardness and wear amount, as compared with the photosensitive member with no protective layer. From the results, the wear life of the photosensitive member is expected to be longer by three to eight times than conventional photosensitive member.

TABLE 1

| Items of Evaluation | | Comp. Ex. 1 | Comp. Ex. 2 | Ex. 1 | Ex. 2 | Ex. 3 |
|---|---|---|---|---|---|---|
| Electro-photographic Characteristics (Initial) | Vo(-V) | 1030 | 1010 | 1110 | 1050 | 1140 |
| | Vk (%) | 84 | 85 | 88 | 89 | 88 |
| | $E_{50}$ (lx·s) | 1.6 | 2.0 | 1.7 | 1.4 | 1.8 |
| | $V_R$ (-V) | 0 | 35 | 0 | 0 | 0 |
| Electro-photographic Characteristics (Durability) | Vo(-V) | 1060 | 1080 | 1120 | 1050 | 1170 |
| | Vk (%) | 81 | 85 | 87 | 90 | 89 |
| | $E_{50}$ (lx·s) | 1.8 | 2.2 | 1.8 | 1.5 | 1.9 |
| | $V_R$ (-V) | 0 | 65 | 0 | 0 | 5 |
| Surface Hardness | | H | 2H | 4H | 4H | 6H |
| Wear Test (mg) | | 2.5 | 1.4 | 0.5 | 0.8 | 0.3 |

(Example 4)

A Se deposited layer as thin as 50 $\mu$ m, serving as the photoconductive layer, formed on the conductive support in a plate form composed of aluminium was sprayed with a coating material (A) or (B) as having the following composition and the resulting coat was cured by ultraviolet rays (at 160 $mJ/cm^2$) to thereby give a protective layer as thin as 3 $\mu$ m.

The resulting photosensitive member was observed for crosscut cellotape separation test and no separation of the protective film was recognized at all.

The surface of the resulting photosensitive member was measured for pencil surface hardness and it was found that it had the pencil surface hardness of 7H. Further, the surface thereof was rubbed with a steel wool without causing any scratch.

Composition of coating material (A)

| | |
|---|---|
| Curable phosphazene compound | 25 grams |
| [1,1,3,3,5,5-hexa(methacryloylethylenedioxy)cyclo-triphosphazene] (Preparation Example 2) | |
| Methyl ethyl ketone | 10 grams |
| Ethyl cellosolve | 5 grams |
| Xylene | 10 grams |
| Isopropyl alcohol | 20 grams |
| Ethanol | 5 grams |
| 1-Hydroxycyclohexyl phenyl ketone | 1 gram |

Composition of coating material (B)

The coating material (B) was prepared by adding 5 grams of powders having particle sizes of 0.3 μ m or smaller and composed of 85 parts by weight of $SnO_2$ and 15 parts by (A) employed in Example 4 in the game manner as in Example 4.

The resulting photosensitive member was observed for crosscut cellotape separation test and no separation of the protective film was recognized at all.

The surface of the resulting photosensitive member was measured for pencil surface hardness and it was found that it had the pencil surface hardness of 7H. Further, the surface thereof was rubbed with a steel wool without causing any scratch.

(Example 6)

The photoconductive layer as thin as 4μ m formed on the conducted support in a plate form composed of aluminum by using a below composition. Composition for the photoconductive layer

| | |
|---|---|
| Curable phosphazene compound | 25 grams |
| [1,1,3,3,5,5-hexa(methacryloylethylenedioxy)cyclo-triphosphazene] (Preparation Example 2) | |
| Methyl ethyl ketone | 10 grams |
| Ethyl cellosolve | 5 grams |
| Xylene | 10 grams |
| Isopropyl alcohol | 20 grams |
| Ethanol | 5 grams |
| 1-Hydroxycyclohexyl phenyl ketone | 1 gram |
| Poly-N-vinylcarbazole | 0.01 gram |
| Trinitrofluorene | 0.01 gram |

The resulting photosensitive member was observed for crosscut cellotape separation test and no separation of the photoconductive layer was recognized at all.

The crosscut cellotape separation test referred to herein is a test for evaluating adhesion of the coat and it is such that the surface of the photoconductive layer was cut by a cutter knife at intervals of 1 mm in lengthwise and crosswise directions like a chess board in a 1 x 1 mm square area and Cellotape (Nichiban K.K.) was attached to the square area. After a predetermined period of time, the tape was removed and counted the number of crosscut coat sections removed.

The surface of the resulting photosensitive member was measured for pencil surface hardness and it was found that it had the pencil surface hardness of 7H. Further, the surface thereof was rubbed with a steel wool without causing any scratch.

The protective layer formed with the cured layer of the curable phosphazene compound can provide the effect of imparting remarkable electrophotographic characteristics than no separation of the protective layer is made or no scratch is formed on the surface thereof, the protective layer is thin yet excellent in strength, and the protective layer causes no curving.

Therefore, the electrophotographic photosensitive member with the protective layer formed by the cured resin of the curable phosphazene compound is good in durability and so on in terms of heat resistance, moisture resistance, etc. and image can be created in a stable manner for a long period of time.

Also, the photoconductive layer formed by the cured resin of the curable phosphazene compound presents the effects that it causes no separating or no scratching, it is thin and excellent in strength, and it causes no curving.

Hence, the electrophotographic photosensitive member with the photoconductive layer formed by the curable phosphazene compound is good in durability and so on in terms of heat resistance, moisture resistance, etc. and image can be created in a stable manner for a long period of time.

## Claims

1. An electrophotographic photosensitive member wherein at least a surface of a protective layer so disposed as to coat a photoconductive layer formed on an electroconductive support is composed of a cured resin of a curable phosphazene compound.

2. An electrophotographic photosensitive member as claimed in claim 1, wherein said curable phosphazene compound is as represented by following general formula [I]:

   -[NP(X)a(Y)b]n- [I]

   (wherein a and b are each a real number in which
   $a > 0$ and $b \geqq 0$, and $a + b = 2$;
   $n \geqq 3$;
   X is a curable group; and
   Y is a non-curable group).

3. An electrophotographic photosensitive member as claimed in claim 1, wherein said curable phosphazene compound is as represented by following general formula [Ia]:

   -[NP(X)a(Y)b]n- [Ia]

   (wherein a and b are each a real number in which
   $a > 0$ and $b \geqq 0$, and $a + b = 2$;
   n is $\geqq 3$ yet $\leqq 18$;
   X is a curable group; and
   Y is a non-curable group).

4. An electrophotographic photosensitive member as claimed in claim 1, wherein said curable phosphazene compound is as represented by following general formula [Ib]:

$[NP(X)_a(Y)_b]_n$ [Ib]

(wherein a and b are each a real number in which a > 0 and b ≧ 0, and a + b = 2;
n is 3 - 4;
X is a curable group; and
Y is a non-curable group).

5. An electrophotographic photosensitive member as claimed in claim 1, wherein said curable phosphazene compound is as represented by following general formula [II]:

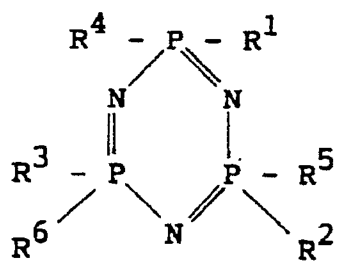

[II]

(wherein $R^1$ and $R^2$ are each an acryloyl group, a methacryloyl group, an acryloyl-containing group or a methacryloyl-containing group, provided that $R^1$ and $R^2$ are identical to or different each other; and

$R^3$, $R^4$, $R^5$ and $R^6$ are each an acryloyl group, a methacryloyl group, an acryloyl- or methacryloyl-containing group, an alkyl group, a substituted alkyl group, an alkoxy group, a substituted alkoxy group, an aryl group, a substituted aryl group, an aryloxy group or a substituted aryloxy group, provided that $R^3$, $R^4$, $R^5$ and $R^6$ are identical to or different from each other).

6. An electrophotographic photosensitive member as claimed in claim 1, wherein said curable phosphazene compound is as represented by following general formula [IIa]:

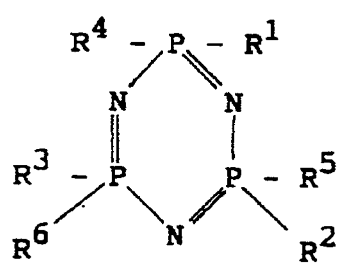

[IIa]

(wherein $R^1$, $R^2$ and $R^3$ are each a methacryloyl-containing group; and
$R^4$, $R^5$ and $R^6$ are each a methacryloyl-containing group or an aryloxy group;
provided that $R^1$, $R^2$, $R^3$, $R^4$, $R^5$ and $R^6$ are identical to or different from each other).

7. An electrophotographic photosensitive member as claimed in claim 1, wherein said protective layer is composed of a cured resin of said curable phosphazene compound.

8. An electrophotographic photosensitive member as claimed in claim 1, wherein said protective layer comprises a coat layer formed on the surface of the photoconductive layer and containing at least a resin selected from the group consisting of a polyurethane resin, a polycarbonate resin, a polyacrylate resin, a polymethacrylate resin, a polyisocyanate resin and an epoxy resin and a cured layer of the

curable phosphazene compound formed on a surface of the coat layer.

**9.** An electrophotographic photosensitive member as claimed in claim 8, wherein said coat layer contains a metal oxide.

**10.** An electrophotographic photosensitive member as claimed in claim 8, wherein said coat layer is such that fine powders composed of a metal oxide comprising $SnO_2$ or $SbO_2$ are dispersed in the polycarbonate resin.

**11.** An electrophotographic photosensitive member with an electroconductive support and a photoconductive layer formed thereon, wherein said photoconductive layer is formed with a curable phosphazene compound.

**12.** An electrophotographic photosensitive member as claimed in claim 11, wherein said photoconductive layer comprises a charge generation layer and a charge transport layer, said charge generation layer formed on a surface of the electroconductive support and containing a charge generating substance and a binder resin and said charge transport layer formed on a surface of said charge generation layer and containing a charge carrying substance and a cured resin of a curable phosphazene compound.

**13.** An electrophotographic photosensitive member as claimed in claim 11, wherein said photoconductive layer comprises a Se-containing deposited film formed on a surface of the electroconductive support and the cured resin of the curable phosphazene compound.

**14.** An electrophotographic photosensitive member as claimed in claim 11, wherein said curable phosphazene compound is as represented by following general formula [I]:

-[NP(X)a(Y)b]n- [I]

(wherein a and b are each a real number in which
$a > 0$ and $b \geqq 0$, and $a + b = 2$;
$n \geqq 3$;
X is a curable group; and
Y is a non-curable group).

**15.** An electrophotographic photosensitive member as claimed in claim 11, wherein said curable phosphazene compound is as represented by following general formula [Ia]:

-[NP(X)a(Y)b]n- [Ia]

(wherein a and b are each a real number in which
$a > 0$ and $b \geqq 0$, and $a + b = 2$;
n is $\geqq 3$ yet $\leqq 18$;
X is a curable group; and
Y is a non-curable group).

**16.** An electrophotographic photosensitive member as claimed in claim 11, wherein said curable phosphazene compound is as represented by following general formula [Ib]:

-[NP(X)a(Y)b]n- [Ib]

(wherein a and b are each a real number in which
$a > 0$ and $b \geqq 0$, and $a + b = 2$;
n is 3 - 4;
X is a curable group; and
Y is a non-curable group).

17. An electrophotographic photosensitive member as claimed in claim 11, wherein said curable phosphazene compound is as represented by following general formula [II]:

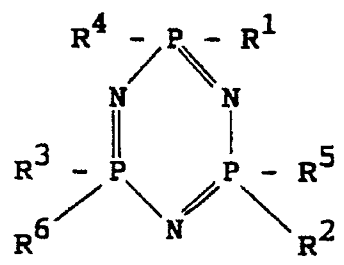

[II]

(wherein $R^1$ and $R^2$ are each an acryloyl group, a methacryloyl group, an acryloyl-containing group or a methacryloyl-containing group, provided that $R^1$ and $R^2$ are identical to or different each other; and $R^3$, $R^4$, $R^5$ and $R^6$ are each an acryloyl group, a methacryloyl group, an acryloyl- or methacryloyl-containing group, an alkyl group, a substituted alkyl group, an alkoxy group, a substituted alkoxy group, an aryl group, a substituted aryl group, an aryloxy group or a substituted aryloxy group, provided that $R^3$, $R^4$, $R^5$ and $R^6$ are identical to or different from each other).

18. An electrophotographic photosensitive member as claimed in claim 11, wherein said curable phosphazene compound is as represented by following general formula [IIa]:

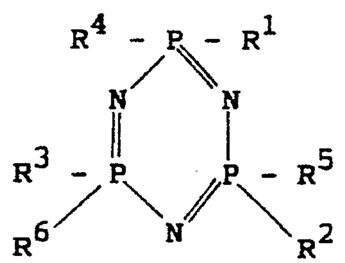

[IIa]

(wherein $R^1$, $R^2$ and $R^3$ are each a methacryloyl-containing group; and $R^4$, $R^5$ and $R^6$ are each a methacryloyl-containing group or an aryloxy group; provided that $R^1$, $R^2$, $R^3$, $R^4$, $R^5$ and $R^6$ are identical to or different from each other).